# EUROPEAN PATENT APPLICATION

(11) **EP 2 868 899 A1**
(43) Date of publication of application: **06.05.2015**
(21) Application number: 14190938.2
(22) Date of filing: 29.10.2014
(51) Int. Cl.: F02C 9/28, F01D 21/10, F01D 21/12, F01D 25/00, F23N 5/00

(54) **Setting gas turbine firing to maintain metal surface temperatures**

(30) Priority: 29.10.2013 US 201314066225
(71) Applicant: General Electric Company, Schenectady, New York 12345 (US)
(72) Inventor: Elward, Kevin Michael, Greenville, SC South Carolina 29615 (US); Kopcho, Scott Alan, Greenville, SC South Carolina 29615 (US); Thatcher, Robert Thomas, Greenville, SC South Carolina 29615 (US); Lomas, Ariel Harter, Greenville, SC South Carolina 29615 (US); Carey, Bradley Steven, Greenville, SC South Carolina 29615 (US); Morgan, Clive Andrew, Greenville, SC South Carolina 29615 (US)
(74) Representative: Cleary, Fidelma

(57) **Abstract**

The systems, methods, and computer-readable media set a gas turbine firing temperature to maintain gas turbine metal surface temperatures. In certain embodiments, a method (300) of setting a gas turbine firing temperature is disclosed that may comprise determining (310) a critical temperature at which ash from ash bearing fuels becomes unremovable by conventional water wash procedures, determining (330) hot gas path component metal surface temperatures, and adjusting (340) the gas turbine firing temperature to maintain the metal surface temperatures below the critical temperature. Determining the metal surface temperatures may be based at least in part on measured gas turbine parameters, gas turbine performance models, and empirical models.

## Description

### TECHNICAL FIELD

This disclosure generally relates to gas turbines, and in particular to systems and methods for setting gas turbine firing to maintain metal surface temperatures.

### BACKROUND

Over the several past decades, gas turbines have become a significant source of power generation and mechanical drive applications. Factors that have resulted in this utilization include their thermal efficiency, availability, and the ability to operate on a wide spectrum of fuels. Today, there are numerous turbines worldwide in which ash bearing fuels are used. These fuels may contain trace contaminants (such as vanadium) that can have detrimental effects on the high temperature materials employed in the turbine and cause lower turbine performance. By burning ash bearing fuels, such as crude oil, ash deposits on hot gas path components of gas turbines. As the ash deposits on certain gas turbine components, the performance of the gas turbine can deteriorate resulting in lowered gas turbine output and reduced efficiency. If the ash is relatively soft, it can be removed by an offline water wash such that gas turbine performance can be recovered to near new and/or clean levels. Above a certain component surface metal temperature, this ash can become hardened such that it cannot be washed and may require mechanical cleaning to recover performance. The mechanical cleaning process typically requires shut down and disassembly which results in extended down time and lost production. Currently, gas turbine firing temperatures are usually set below a constant value that has been determined by field experience. Nevertheless, increasing the firing temperature has been a major developmental thrust for these turbines since increased firing temperatures increase the output and efficiency. Accordingly, development and design of fuel handling and control systems to achieve higher firing temperature machines is continuously being sought.

### BRIEF DESCRIPTION OF THE DISCLOSURE

Some or all of the above needs may be addressed by certain embodiments of the disclosure. According to an example embodiment, there is disclosed a method of setting a gas turbine firing temperature that may include determining a critical temperature at which ash from ash bearing fuels becomes unremovable by conventional water wash procedures, determining hot gas path component metal surface temperatures, and adjusting the gas turbine firing temperature to maintain the metal surface temperatures below the critical temperature. Determining the metal surface temperatures may be based upon measured gas turbine parameters, gas turbine performance models, and empirical models.

The measured gas turbine parameters may be used as inputs to gas turbine performance models and empirically derived transfer functions which estimate the hot gas path component metal surface temperatures. The gas turbine firing temperature may be adjusted based upon lowered gas turbine output resulting from ash deposits on hot gas components. Further, the gas turbine firing temperature may be adjusted based upon degradation caused by ash deposition on a first stage turbine nozzle.

In another embodiment, a system for setting a gas turbine firing temperature is disclosed. The system may include at least one controller in communication with a plurality of sensors. The controller may be operable to determine a critical temperature at which ash from ash bearing fuels becomes unremovable by conventional water wash procedures, determine hot gas path component metal surface temperatures based upon data received from the plurality of sensors, and adjust a gas turbine firing temperature to maintain the metal surface temperatures below the critical temperature.

According to yet another embodiment of the invention, there is disclosed a computer- readable medium having computer-executable instructions for execution by the processor. The processor may be configured to determine a critical temperature at which ash from ash bearing fuels becomes unremovable by conventional water wash procedures, determine hot gas path component metal surface temperatures based upon data received from the plurality of sensors; and determine a gas turbine firing temperature to maintain the metal surface temperatures below the critical temperature.

Thus, certain embodiments of the disclosure may have the technical effect of improving gas turbine performance over time while minimizing the formation of hard ash deposits on certain hot gas path components. Other embodiments, features, and aspects of the disclosure are described in detail herein and are considered a part of the claimed disclosure. Other embodiments, features, and aspects can be understood with reference to the following detailed description, accompanying drawings, and claims.

### BRIEF DESCRIPTION OF THE FIGURES

References will now be made to the accompanying figures, which are not necessarily drawn to scale, and wherein:
FIG. 1 is a schematic block diagram of an example system architecture for setting gas firing temperatures by adjusting the firing temperature to maintain metal surface temperatures below a critical temperature in accordance with an embodiment of the disclosure.
FIG.2 illustrates a functional block diagram of an example control apparatus in accordance with an embodiment of the disclosure.
FIG. 3 is a flowchart illustrating an exemplary method for setting gas firing temperatures in accordance with an embodiment of the disclosure.

### DETAILED DESCRIPTION OF CERTAIN EMBODIMENTS

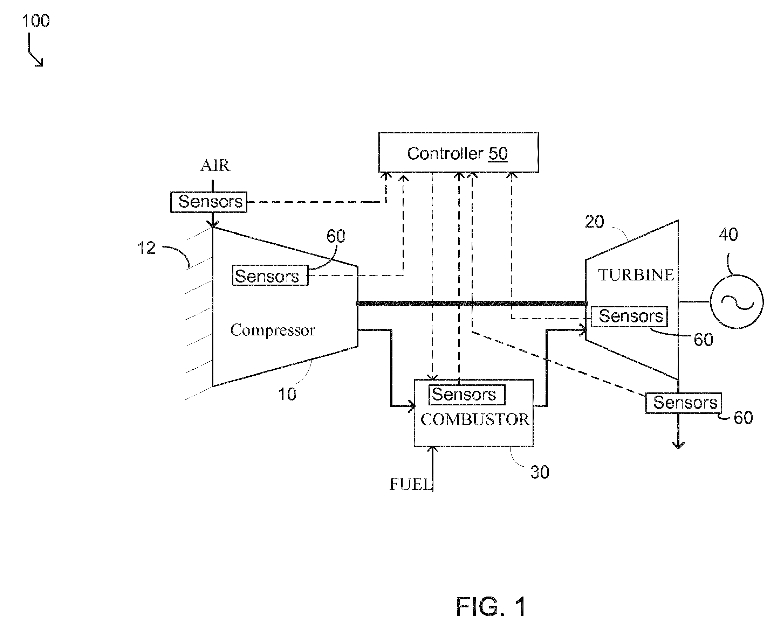

Example embodiments of the disclosure now will be described more fully hereinafter with reference to the accompanying drawings, in which some, but not all embodiments are shown. Indeed, the disclosure may be embodied in many different forms and should not be construed as limited to the embodiments set forth herein; rather these embodiments are provided so that this disclosure will satisfy applicable legal requirements. Like numbers refer to like elements throughout. Referring to FIG. 1 of the drawings, there is shown a functional block diagram of a representative embodiment of an example gas turbine system 100 constructed in accordance with an embodiment of the disclosure. In the illustrated embodiment, the turbine system 100 may burn ash bearing fuels. Embodiments of the disclosure may have the technical effect of setting the gas turbine firing temperature utilizing measured gas turbine controls parameters, gas turbine performance models, and empirical models to estimate hot gas path component surface temperatures to optimize gas turbine performance while minimizing hard ash formation.

The compressor 10 may compress incoming air to high pressure. Air can enter the compressor 10 by way of a variable inlet guide vane mechanism 12 which may control the degree of opening of the turbine air. The combustor 30 can mix the air with fuel and burns the fuel to produce high-pressure, high-velocity gas. The hot combustion gases can flow across a turbine 20 causing it to rotate converting the energy from the hot gases into mechanical energy. This mechanical energy may be used with a generator 40 for producing electricity or with other systems for other applications that are well known in the art.

A temperature system controller 50 may limit fuel flow to the gas turbine 100 to maintain internal operating temperatures within desired limits. The firing temperature of gas turbines burning ash bearing fuels may be limited by the temperature at which the ash deposited on the hot gas path components becomes hard and not removable by conventional water wash procedures. As the ash deposits, the performance of the gas turbine deteriorates resulting in lowered gas turbine output and reduced efficiency.

The highest temperature in the gas turbine can occur in the flame zone of the combustion chambers 30. The combustion gas in that zone can be diluted by cooling air and flows into the turbine section 20. The temperature of that gas is known as the firing temperature of the gas turbine. It is this temperature that may be limited by the control system 50. Accordingly, at least one technical effect of the temperature control system 100 may control the firing temperature below a critical temperature and thus increase efficiency.

Since it is impractical to measure temperatures directly in the combustion chambers or at the turbine inlet, the firing temperature can be determined as a function of exhaust temperature, inlet temperature, the pressure ratio across the compressor, and pressure ratio drops across the system. Sensors 60 may be used to collect and store the inputs for these parameters.

The gas turbine controller 50 may use measured gas turbine performance parameters as inputs to gas turbine performance models and empirically derived transfer functions which estimate hot gas path component metal temperatures. Gas turbine firing temperature is then adjusted to keep metal temperatures below the critical temperature at which deposited ash becomes hard and unwashable. Firing temperature falls as ash deposits on the first stage turbine nozzle. The gas turbine performance models (model based controls) may be used to maintain firing temperature to compensate for the degradation caused by ash deposition on the first stage turbine nozzle. Accordingly, at least one technical effect may increase gas turbine output over time without the need for extended outages to clean hardened ash deposits.

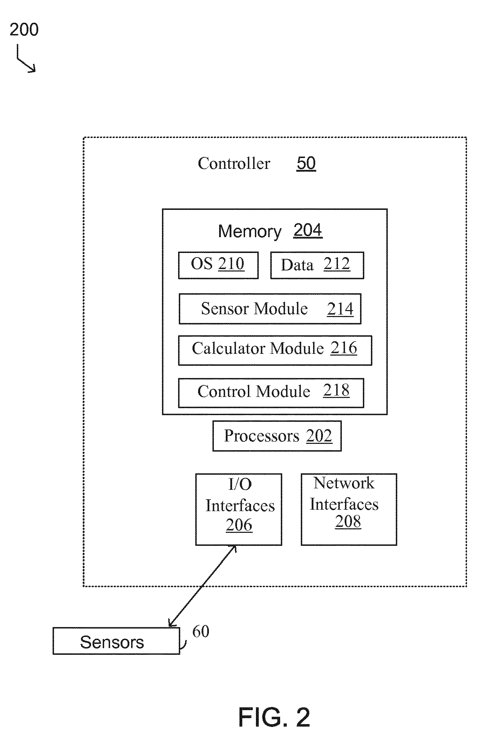

FIG. 2 illustrates, by way of a block diagram, an example a temperature system controller 50 in accordance with an embodiment of the disclosure. The controller 50 may include one or more processors 202, one or more memories 204, one or more input/output ("I/O") interfaces 206, and one or more network interfaces 208. The controller 50 may include other devices not depicted.

The processor 202 may include one or more cores and is configured to access and execute at least in part instructions stored in the one or more memories 204. The one or more memories 204 can include one or more computer-readable storage media ("CRSM"). The one or more memories 204 may include, but are not limited to, random access memory ("RAM"), flash RAM, magnetic media, optical media, and so forth. The one or more memories 204 may be volatile in that information is retained while providing power or non-volatile in that information is retained without providing power.

The one or more I/O interfaces 206 may also be provided in the controller 50. These I/O interfaces 206 allow for coupling devices such as sensors, keyboards, mice, monitors, printers, external memories, and the like. The I/O interface 206 may allow for coupling to various sensors 60 that can provide operational data such as those that can be used to collect exhaust temperatures, inlet temperatures, the compressor inlet pressures, the compressor outlet pressure, and other parameters across the system.

The one or more network interfaces 208 may provide for the transfer of data between the controller 50 and another device directly such as in a peer-to-peer fashion, via a network, or both. The network interfaces 208 may include, but are not limited to, personal area networks ("PANs"), wired local area networks ("LANs"), wide area networks ("WANs"), wireless local area networks ("WLANs"), wireless wide area networks ("WWANs"), and so forth. The network interfaces 208 may utilize acoustic, radio frequency, optical, or other signals to exchange data between the controller 50 and another device such as a smart phone, an access point, a host computer and the like.

The one or more memories 204 may store instructions or modules for execution by the processor 202 to perform certain actions or functions. The following modules are included by way of illustration, and not as a limitation. Furthermore, while the modules are depicted as stored in the memory 204, in some implementations, these modules may be stored at least in part in external memory which is accessible to the controller 50 via the network interfaces 208 or the I/O interfaces 206. These modules may include an operating system module 210 configured to manage hardware resources such as the I/O interfaces 206 and provide various services to applications or modules executing on the processor 202.

A sensor module 214 may be stored in the memory 204. The module 214 may be configured to continuously acquire sensor data from the one or more input devices and calculate various parameters such as the pressure ratio across the compressor, pressure ratio drops across the system, and any other derived operation parameter. The calculator module 216 may be configured to use the measured and calculated gas turbine parameters as inputs to gas turbine performance models and empirically derived transfer functions to estimate hot gas path component metal temperatures. The module 216 may store the data and calculated estimates in the datastore 212.

A controller module 218 may be configured to control the gas turbine firing temperature below the critical temperature at which deposited ash becomes hard and unwashable. The gas firing temperature may be controlled by adjusting the fuel flow to the combustor 30. The combustion gas in that zone can be diluted by adjusting the amount of cooling air that flows into the turbine section 40.

The controller 50 described above with reference to FIG. 2 is provided by way of example only. As desired, numerous other embodiments, systems, methods, apparatus, and components may be utilized to control the gas turbine firing temperature below the critical temperature.

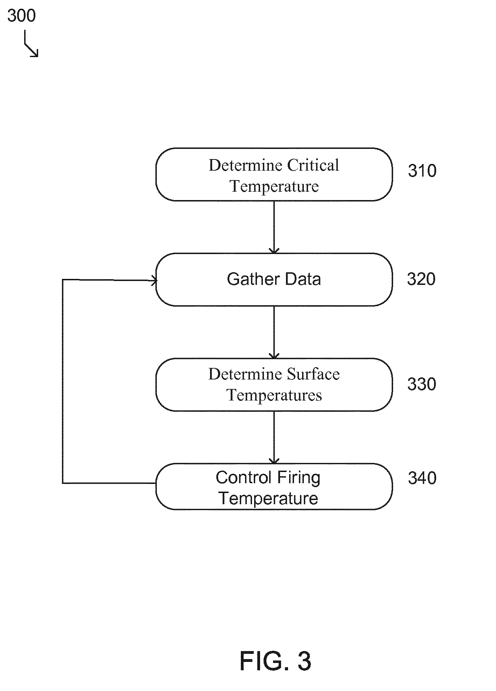

FIG. 3 illustrates a flow diagram for controlling the gas turbine firing temperature below a critical temperature in accordance with an embodiment.

In operation 310, temperature system controller may obtain the temperature at which the ash deposited on the hot gas path components becomes hard and not removable by conventional water wash procedures. Currently, gas turbine firing temperatures can be set below a constant value that has been determined by field experience. The control curves can be determined based on a new and clean gas turbine. Firing temperature can fall as ash is deposited on the first stage turbine nozzle. This improvement may use gas turbine performance models (model based controls) to maintain firing temperature to compensate for the degradation caused by ash deposition on the first stage turbine nozzle.

In operation 320, the temperature system controller may acquire sensor data from the one or more input devices such as inlet temperatures, outlet temperatures, pressures at various points in the system, and any other desired inputs and calculates various parameters such as the pressure ratio across the compressor, pressure ratio drops across the system, and any other derived operation parameter.

In operation 330, the gas turbine controller can use measured gas turbine performance parameters as inputs to gas turbine performance models and empirically derived transfer functions to estimate hot gas path component metal temperatures.

In operation 340, the gas turbine firing temperature may be adjusted to keep metal temperatures below the critical temperature at which deposited ash becomes hard and unwashable. At least one technical effect of this process may allow maximizing gas turbine performance over time while preventing the formation of hard ash deposits on the hot gas path components.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed. [0034] This written description uses examples to disclose certain embodiments of the disclosure, including the best modes, and also to enable any person skilled in the art to practice certain embodiments of the disclosure, including making and using any devices or systems and performing any incorporated methods. The patentable scope of certain embodiments of the disclosure is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method of setting a gas turbine firing temperature, comprising:
determining (310) a critical temperature at which ash from ash bearing fuels becomes unremovable by conventional water wash procedures;
determining (330) hot gas path component metal surface temperatures; and
adjusting (340) the gas turbine firing temperature to maintain the metal surface temperatures below the critical temperature.

2. The method of claim 1, wherein determining the metal surface temperatures is based at least in part on measured gas turbine parameters.

3. The method of claim 1 or 2, wherein determining the metal surface temperatures is based at least in part on gas turbine performance models.

4. The method of any of claims 1 to 3, wherein determining the metal surface temperatures is based at least in part on empirical models.

5. The method of any of claims 2 to 4, wherein the measured the measured gas turbine parameters are used as inputs to gas turbine performance models and empirically derived transfer functions which estimate the hot gas path component metal surface temperatures.

6. The method of any preceding claim, wherein the gas turbine firing temperature is adjusted based at least in part on lowered gas turbine output resulting from ash deposits on hot gas components.

7. The method of any preceding claim, wherein the gas turbine firing temperature is adjusted based at least in part on degradation caused by ash deposition on a first stage turbine nozzle.

8. A computer program comprising computer program code means adapted to perform the method of any of claims 1 to 7 when executed on a computer.

9. The computer program of claim 8, embodied on a computer readable medium.

10. A system (200) for setting a gas turbine firing temperature, comprising:
at least one controller (50) in communication with a plurality of sensors (60), wherein the at least one controller includes a processor (202) configured to execute the computer program of claim 8.

11. The system of claim 10, wherein the data received from the plurality of sensors (60) consists of measured gas turbine parameters.
